(19) Europäisches Patentamt
European Patent Office
Office européen des brevets

(11) **EP 2 904 424 B1**

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(21) Anmeldenummer: **13748280.8**

(22) Anmeldetag: **31.07.2013**

(51) Int Cl.:
**G01S 15/93** (2006.01)      **G01S 7/527** (2006.01)
**G01S 15/10** (2006.01)

(86) Internationale Anmeldenummer:
**PCT/EP2013/066090**

(87) Internationale Veröffentlichungsnummer:
**WO 2014/056645 (17.04.2014 Gazette 2014/16)**

(54) **UNTERDRÜCKUNG DES NACHSCHWINGENS EINES WANDLERS FÜR DIE UMFELDDETEKTION**

SUPPRESSION OF POST-PULSE OSCILLATION OF A CONVERTER FOR ENVIRONMENTAL DETECTION

SUPPRESSION DE L'OSCILLATION D'UN CONVERTISSEUR POUR LA DÉTECTION ENVIRONNEMENTALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.10.2012 DE 102012218298**

(43) Veröffentlichungstag der Anmeldung:
**12.08.2015 Patentblatt 2015/33**

(73) Patentinhaber: **Robert Bosch GmbH**
**70442 Stuttgart (DE)**

(72) Erfinder: **KARL, Matthias**
**76275 Ettlingen (DE)**

(56) Entgegenhaltungen:
**JP-A- H10 268 035      US-A1- 2001 012 238**

**Beschreibung**

Stand der Technik

Die vorliegende Erfindung betrifft eine Vorrichtung zur Umfeldsensorik mit einem Wandler, welcher für das Aussenden und Empfangen von Detektionssignalen verwendet wird. Die vorliegende Erfindung betrifft insbesondere eine Vorrichtung, bei welcher das Nachschwingen bzw. Ausschwingen des Wandlers nach einem Sendevorgang mittels geeigneter, insbesondere adaptiver, Filter zur rascheren Erzeugung verwertbarer Detektionssignale unterdrückt wird. Für die Distanzmessung bzw. Umfeldüberwachung werden insbesondere im Automobilbau Wandler eingesetzt, welche in einem ersten Verfahrensschritt in Funktion eines Senders ein Signal aussenden und anschließend in Funktion eines Empfängers Reflexionen des ausgesendeten Signals empfangen und in elektrische Signale wandeln. Aufgrund der guten Beherrschbarkeit, Verträglichkeit und der geringen Kosten werden hierfür üblicherweise akustische Wandler eingesetzt, welche insbesondere im Ultraschallbereich arbeiten. Aus der Pulslaufzeit zwischen dem Aussenden und dem Empfangen eines reflektierten Signals wird auf den Objektabstand zum Wandler gefolgt.

Die US 2001/012238 A1 schlägt, basierend auf der Annahme, dass die Resonanzfrequenz des Wandlers konstant und unabhängig von der Übertragungsfrequenz ist, vor, einen Wandler mit einer Resonanzfrequenz von 43 kHz zur Aussendung eines Testsignals mit einer Frequenz von 39 kHz zu verwenden. Zur Umschaltung wird ein Sende/Empfangsschaltkreis verwendet. Überdies wird das Problem angeschlossen, dass sich die Resonanzfrequenz eines Sendeempfängers ändern kann. Sofern die Resonanzfrequenz und die Sendefrequenz aufgrund einer solchen Frequenzverschiebung einander zu nahe kommen, kann ein Mikrocomputer die Sendefrequenz beispielsweise um 1 kHz verändern.

Zur allgemeinen Beschreibung der Zeitverläufe eines i-ten Messzyklus' wird im Folgenden das Formelzeichen $T_i$ und der Begriff "Zykluszeit" verwendet. Die Zykluszeit $T_i$ berechnet sich aus der Differenz der Absolutzeit t sowie dem jeweiligen Zeitpunkt des Beginns $t_{Si}$ des Aussendens eines Signals der Signaldauer $T_{Pi}$ eines i-ten Messzyklus' gemäß der Formel:

$$T_i = t - t_{Si} - T_{Pi}$$

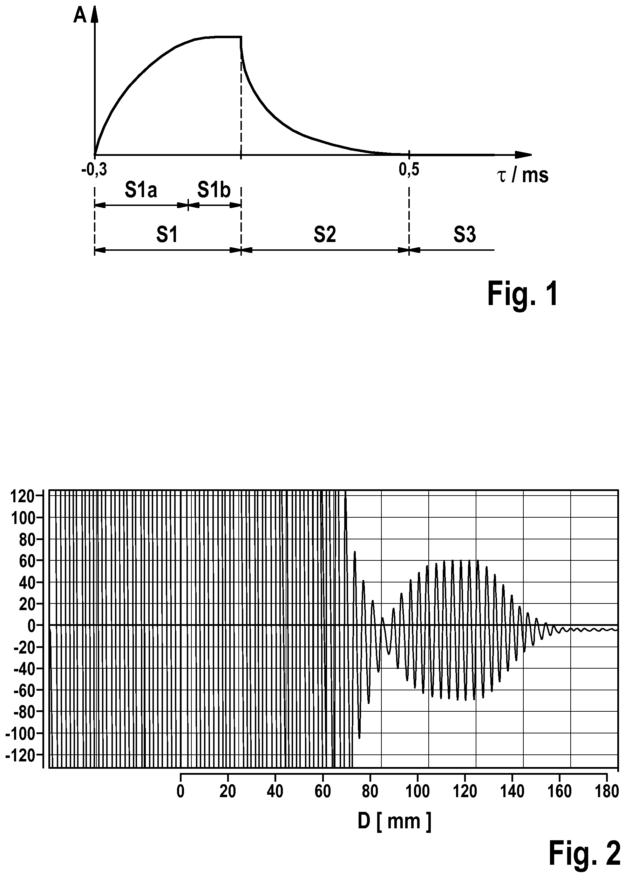

Fig. 1 visualisiert einen typischen Verlauf einer Schwingungsamplitude eines Ultraschallwandlers während eines Messzyklus'. Während einer als "Senden" (S1) bezeichneten Zeit der aktiven (elektrischen) Anregung des Wandlers, beginnt der Wandler mit der ihm eingeprägten Frequenz zu schwingen. Da die heutigen Wandler resonante Systeme höherer Ordnung sind, teilt sich die Sendezeit auf ein eine "Einschwingzeit" (S1a) und eine "Konstantsendezeit" (S1b).

Nach dem Ende der aktiven Anregung folgt das Ausschwingen (S2) der durch die Anregung im Wandler gespeicherten Schwingungsenergie. Erst wenn genügend Schwingungsenergie des Wandlers abgebaut wurde, können auf dem Wandler eintreffende Echos mit dem Wandler detektiert werden. Dieser Zeitpunkt bestimmt den Beginn des Empfangens (S3). Sendezeit plus Ausschwingen beschränken die Nahmessfähigkeit der Objekte bei Sensoren, die Echos von reflektierenden Objekten über Laufzeitermittlung sensieren sollen.

Sofern das Ausschwingsignal nach erfolgtem Sendevorgang noch andauert, mit anderen Worten also die nach dem Senden verbliebenen und abklingenden Membranschwingungen noch nicht vollständig zum Erliegen gekommen sind, ist das Empfangssignal r(T) eine Überlagerung des Ausschwingens $r_A(T)$ und der Echos $r_E(T)$ des von Objektiven reflektierenden Sendesignals.

Das Ausschwingen $r_A(T)$ verläuft bei gleicher Ansteuerung und gleichen Randbedingungen (insbesondere Klima, Exemplareigenschaften) gleich. Häufig wird die Gestalt solcher periodischer Signale mit Hilfe des Verlaufs der Signalstärke des Ausschwingens $R_A(T)$ sowie dem Frequenzverlauf des Ausschwingens $f_A(T)$ sowie des Phasenverlaufs des Ausschwingens $\varphi_A(T)$ gemäß der Formel

$$r_A(\tau) = R_A(\tau) \cdot \sin(2\pi \cdot f_A(\tau) \cdot \tau + \varphi_A(\tau)) \qquad (2)$$

beschrieben. Bei heute in Serie befindlichen Systemen wird dabei nur die Signalstärke ausgewertet.

WO-2011009786 A1 beschreibt eine Mehrträger-Impulsmodulation, bei der ein Frequenzsatz durch mehrere via verschiedene Wandler ausgesandte Frequenzen codiert ist.

WO-2010063510 A1 beschreibt allgemein breitbandige Modulationsverfahren mit Anregungen außerhalb der Durchlassfrequenz des Wandlers und Verfahren zur Korrektur des Frequenzganges des Wandlers.

EP 2 251 710 A2 beschreibt eine Pulsdauermodulation, bei der mittels kurzer Sendepulsdauern eine hohe Ortsauflösung und eine gute Nahmessfähigkeit erreicht werden.

Es ist daher wünschenswert, das Ausschwingen des Wandlers bei der Gestaltung des akustischen Sendesignals weiter unterdrücken zu können, um räumlich nah am Sensor befindliche Reflexpunkte von Objekten noch detektieren zu können.

Offenbarung der Erfindung

Die vorstehend genannte Aufgabe wird erfindungsgemäß gelöst durch eine Vorrichtung mit den Merkmalen gemäß Anspruch 1. Entsprechend weist die Vorrichtung zur Umfeldsensorik einen Wandler zum Senden und Empfangen von Signalen auf. Der Wandler ist als elektroakustischer Wandler ausgestaltet. Bevorzugt kann dieser im Ultraschallbereich arbeiten. Des Weiteren weist die Vorrichtung eine Signalverarbeitungseinheit auf, welche eingerichtet ist, den Wandler mit einem zum Senden geeigneten Signal zu versorgen. Weiter kann die Signalverarbeitungseinheit eingerichtet sein, ein vom Wandler empfangenes (z.B. akustisches) Signal zu erhalten und aus der Laufzeit zwischen Sendevorgang und Eingang eines entsprechenden Reflexionssignals einen Abstand des Wandlers von Umgebungsobjekten zu bestimmen. Erfindungsgemäß ist die Signalverarbeitungseinheit eingerichtet, den Wandler mit einer Sendesignalform zu beaufschlagen, welche im Vergleich zu dessen Ausschwingsignal eine andere Signalform aufweist. Insbesondere kann die Sendesignalform eine andere Grundfrequenz aufweisen, als sie der Grundmode des Ausschwingsignals, also der mechanischen Resonanzfrequenz des Wandlers, entspricht. Weiter kann die Signalverarbeitungseinheit erfindungsgemäß eingerichtet sein, dass über den Wandler empfangene Signal durch einen Sperrfilter zumindest anteilig vom Ausschwingsignal zu befreien. Mit anderen Worten werden diejenigen Energieanteile, welche im Wandlersignal vom Ausschwingvorgang herrühren, vermindert, so dass die Energieanteile, welche durch das reflektierte und vom Wandler empfangene Signal stammen, besser analysiert werden können.

Die Unteransprüche zeigen bevorzugte Weiterbildungen der Erfindung.

Bevorzugt kann die Signalverarbeitungseinheit eingerichtet sein, den Sperrfilter den Eigenschaften des Ausschwingsignals nachzuführen. Das Ausschwingsignal ist beispielsweise durch seinen Amplituden- und/oder Frequenzverlauf gekennzeichnet. Während naturgemäß eine Abnahme der Amplitude beim Ausschwingsignal erfolgt, ist zusätzlich auch eine Veränderung der Frequenz des Ausschwingsignals über der Zeit möglich. Unter einem "Nachführen" eines Filters sei im Rahmen der vorliegenden Erfindung verstanden, dass die Eigenschaften des Filters korrespondierend zu einem zu filternden Signal mit der Zeit angepasst werden, so dass einander entsprechende Signalsektionen einer ähnlichen Filtercharakteristik unterworfen sind.

Weiter bevorzugt kann die Signalverarbeitungseinheit eingerichtet sein, die Sperrfrequenz des Sperrfilters der Frequenz, insbesondere der Grundfrequenz, des Ausschwingsignals des Wandlers über der Zeit nachzuführen. Dies bietet den Vorteil, dass beispielsweise die den höchsten energetischen Anteil des Ausschwingsignals aufweisende Grundschwingung mit einer maximalen Dämpfung aus dem gesamten Ausschwingsignal über der Zeit entfernt werden kann.

Weiter bevorzugt kann die Signalverarbeitungseinheit eingerichtet sein, eine zeitvariante Filterung dadurch durchzuführen, dass das Dämpfungsmaß des Sperrfilters dem Verhältnis der Stärke des Ausschwingsignals in Bezug auf die Stärke des empfangenen Signals nachgeführt wird. Mit anderen Worten wird das Dämpfungsmaß dem Pegelunterschied der Amplituden der Spannungen beider Signale nachgeführt. Auf diese Weise kann zu einem frühen Zeitpunkt während des Detektionsvorgangs ein noch hoher Pegel des Ausschwingsignals stark gedämpft werden und nach einer gewissen Zeitdauer das bereits abgeklungene Ausschwingsignal nur noch gering gedämpft werden, während die Präzision und Ansprechgeschwindigkeit des Filters hierbei gesteigert werden kann.

Weiter bevorzugt kann die Signalverarbeitungseinheit um weitere, zur Filterung verwendbare Elemente erweitert werden. Durch diese kann die Signalverarbeitungseinheit eingerichtet sein, die zeitvariante Filterung beispielsweise mittels des zuvor beschriebenen Sperrfilters, sowie zusätzlich mittels eines dem Sperrfilter nachgeschalteten zweiten Filters und beispielsweise mittels einer analogen Mischerstufe durchzuführen. Dabei kann die Signalverarbeitungseinheit eingerichtet sein, die Filterfrequenzeigenschaften des zweiten Filters den Filterfrequenzeigenschaften des Sperrfilters nachzuführen. Ist beispielsweise das Sperrfilter ein analoges Filter und das zweite Filter ein digitales Filter, so können die Vorteile beider Filterprinzipien miteinander vereint werden. Über die analoge Mischerstufe kann dabei das empfangene Signal mittels eines lokalen Oszillators in einen anderen Frequenzbereich transponiert werden, in welchem die Filter kostengünstiger und/oder präziser das Empfangssignal vom Ausschwingsignal trennen können.

Weiter bevorzugt kann der Sperrfilter als zeitdiskret arbeitender Filter ausgeführt sein. Insbesondere in dem Fall, dass der Sperrfilter als zeitdiskret arbeitender Digitalfilter ausgeführt ist, bieten sich flexible Möglichkeiten, den Filter ohne zusätzlichen Hardwareaufwand zu implementieren. Beispielsweise kann ein ohnehin in der Sensorperipherie enthaltener Prozessor einen als Software ausgeführten Digitalfilter darstellen.

Weiter bevorzugt kann die Signalverarbeitungseinheit eingerichtet sein, die filternden Eigenschaften des zeitdiskret arbeitenden Filters mittels Variation der Abtastfrequenz und/oder Variation der Koeffizienten des Filters zeitlich zu variieren. Auf diese Weise ergibt sich eine einfache Möglichkeit, eine Anpassung zeitlich variierender Eigenschaften des Ausklingsignals durch Filtereigenschaften zu berücksichtigen, ohne dass aufwändige dynamische Filterfunktionen implementiert oder (im Falle analoger Filter) Schaltvorgänge zur Anpassung des Filters erforderlich würden.

Weiter bevorzugt kann der Sperrfilter diskrete elektrische Bauteile im Empfangspfad umfassen. Unter diskreten elektrischen Bauteilen seien im Rahmen der vorliegenden Erfindung Bauelemente, wie z.B. Kondensatoren, Spulen, Transistoren und ohmsche Widerstände verstanden, mittels welcher dem Fachmann bekannte Filterstrukturen erzeugt werden können. Insbesondere besteht der Sperrfilter aus einem Netzwerk solcher Bauteile und weist insbesondere Schalter bzw. Transistoren auf. Dabei kann der Sperrfilter eingerichtet sein, insbesondere Frequenzen in einem engen Bereich der Resonanzfrequenz des Wandlers zu unterdrücken, wobei die Zeitvariation des Filters beispielsweise durch ein Trennen bzw. Herstellen elektrischer Verbindungen der Bauteile innerhalb des Empfangspfades des Filterweges erzeugt wird. M.a.W. können die herauszufilternden Frequenzanteile dadurch gezielt unterdrückt werden, indem die Filternetzwerkzweige, welche auf die jeweilige Frequenz abgestimmt sind, beispielsweise mittels eines Transistors als Schalter in das Filternetzwerk einbezogen bzw. in diesem wirkungslos geschaltet werden. Auf diese Weise bietet sich eine Möglichkeit, mittels geringem Aufwand eine Anpassung der Filtereigenschaften an zeitlich variierende Ausschwingsignale bzw. empfangene reflektierte Signale anzupassen.

Weiter bevorzugt kann die Signalverarbeitungseinheit eingerichtet sein, Empfangssignale einer analogen Sperrfilterung und einer anschließenden zeitdiskreten Filterung zu unterziehen. Beispielsweise kann mittels der vorstehend erläuterten schaltbaren Bauteile eine Grobanpassung der Sperrfilterung an das zu filternde Signal erfolgen und anschließend eine zeitdiskrete Filterung durchgeführt werden, welche gegenüber einer alleinigen zeitdiskreten Filterung ein vermindertes Dämpfungsmaß aufweisen kann.

Weiter bevorzugt kann die Signalverarbeitungseinheit eingerichtet sein, das Sendesignal auf einer Frequenz auszusenden, die sich von der Frequenz des Ausschwingsignals unterscheidet. Mit anderen Worten kann das dem Sensor von elektrischer Seite eingeprägte Sendesignal einen erheblichen Energieanteil oder nahezu ausschließlich Energieanteile in einem Bereich aufweisen, welcher der Eigenfrequenz des Sensors benachbart ist. Da nach dem Abschalten der elektrischen Anregung der Wandler im Wesentlichen eine freie Schwingung durchführt, welche im Bereich seiner mechanischen Resonanz liegt, kann auf diese Weise eine Unterscheidbarkeit des aktiv ausgesendeten Sendesignals von dem aufgrund der abgeschalteten Anregung sich einstellenden Ausschwingsignal hergestellt werden. Auf diese Weise kann eine vereinfachte Filterung geringerer Güte bereits zu erheblichen Erfolgen bei der Trennung zwischen Ausschwingsignal und empfangenem reflektiertem Signal erfolgen.

Weiter bevorzugt kann der Frequenzverlauf des Sendesignals dem Frequenzverlauf des Ausschwingsignals nachgeführt werden. Mit anderen Worten kann insbesondere ein fester Frequenzversatz zwischen dem Ausschwingsignal und dem Anregungssignal erzielt werden, wodurch die Filterflankensteilheit über der Zeit konstant gehalten und lediglich die Sperrfrequenz dem Ausschwingsignal nachgeführt werden muss. Auf diese Weise ergeben sich über der Zeit gleichmäßige Sperreigenschaften und ein über der Zeit gleichbleibend geringer Schwund im Energiegehalt des Empfangssignals aufgrund der erfindungsgemäßen Filterung.

Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:

Figur 1 ein Prinzipdiagramm zur Schwingungsamplitude des Wandlers im Verlauf eines Messzyklus',

Figur 2 ein Zeitverlauf eines Empfangssignals einschließlich eines Echos von einem realen Objekt,

Figur 3 ein prinzipielles Frequenzdiagramm zu den Zusammenhängen zwischen der Resonanzfrequenz des ausschwingenden Wandlers und geeigneten Bereichen zur Verwendung für Anregungs- bzw. Sendesignale;

Figur 4 ein Diagramm veranschaulichend Beziehungen der Signalstärke zwischen Ausschwingsignalen und den jeweils zugehörigen Echos gemäß dem Stand der Technik sowie gemäß der vorliegenden Erfindung;

Figur 5 ein Blockdiagramm, veranschaulichend einen Pfad der Signalverarbeitung in einem Ausführungsbeispiel gemäß der vorliegenden Erfindung;

Figur 6 ein Schaltbild, veranschaulichend das Prinzip eines allgemeinen passiven Sperrfilters;

Figur 7 ein Diagramm möglicher Frequenzverläufe einer ausgesandten Signalform gemäß der vorliegenden Erfindung sowie ein korrespondierender Frequenzverlauf des Ausschwingens des verwendeten Wandlers;

Figur 8 zeigt ein Schaltbild zum Betrieb eines Wandlers gemäß einem Ausführungsbeispiel der vorliegenden Erfindung; und

Figur 9    zeigt ein Schaltbild gemäß einem Ausführungsbeispiel zur zeitvarianten Sperrfilterung empfangener Signale.

Ausführungsformen der Erfindung

Figur 1 veranschaulicht die Amplitude eines Wandlers, wie er in einer erfindungsgemäßen Vorrichtung verwendet werden könnte. Über der Zeit lassen sich im Wesentlichen drei verschiedene Betriebszustände im dargestellten Diagramm identifizieren. Zu Beginn der Umfelderkennung wird in einem Sendevorgang S1 der Wandler mit Schwingungsenergie versorgt. Der Sendevorgang S1 kann dabei in einen Einschwingvorgang S1a und einen sich an diesen anschließenden Abschnitt mit im Wesentlichen konstanter Schwingungsamplitude S1 b unterteilen. Hat der Wandler im Schwingungszustand mit im Wesentlichen konstanter Amplitude S1b für die Umfelderkennung hinreichend Energie abgestrahlt, wird die elektrische Anregung des Wandlers abgeschaltet, im Ansprechen worauf ein Ausschwingvorgang S2 mit abnehmender Schwingungsamplitude erfolgt. Die Schwingungen des Wandlers sind in diesem Bereich noch zu groß, um reflektierte bzw. auf den Wandler auftreffende Signale an der elektrischen Seite des Wandlers detektieren zu können. Erst mit einem sich an den Ausschwingvorgang S2 anschließenden Empfangszustand S3 ist das Ausschwingsignal des Wandlers so weit abgeklungen, dass auf den Wandler eintreffende Reflexionssignale auf der elektrischen Seite separiert und ausgewertet werden können. Es ist aus Figur 1 ersichtlich, dass die Ausschwingzeit S2 kurzgehalten werden muss, um frühzeitige Echos, stammend von nahegelegenen Reflexionsobjekten, zuverlässig erkennen zu können.

Figur 2 zeigt das Sonagramm eines Zeitverlaufes, in welchem das Wandlersignal über einer Skala, veranschaulichend den Objektabstand in mm, dargestellt ist. Während in einem Signalbereich, welcher 0 bis 70 mm Abstand entspricht, das Signal hinsichtlich der dargestellten Amplitudenskala in der Übersteuerung befindet, schließt sich ab einem Abstand von 70 mm bis ca. 83 mm eine erkennbare Abnahme der Schwingungsamplitude des Wandlers an. In einem Signalbereich, welcher einer Objektdistanz von 83 mm bis ca. 150 mm entspricht, ist das Reflexionssignal an einem nahegelegenen realen Objekt im Bereich des Wandlers erkennbar. Die vom realen Objekt stammenden Wandlersignale zwischen 83 mm und 150 mm sind gegenüber dem Ausschwingsignal des Wandlers gut erkennbar und könnten daher auch signalverarbeitungstechnisch gut einander gegenüber aufgelöst und ausgewertet werden.

In einer häufig auftretenden Form ist das Ausschwingen von einer festen zeitinvarianten Ausschwingfrequenz $f_A(T) = \mathrm{const.}_T$ gekennzeichnet, insbesondere wenn der Wandler eine ausgeprägte Resonanz aufweist.

Weist beispielsweise der Wandler eine Resonanzfrequenz $f_A(T) = f_{RW} = 48$ kHz auf, so könnte der Wandler zum Aussenden pulsförmig modulierter Signalformen mit einer von der Resonanzfrequenz $f_{RW}$ abweichenden Schwingfrequenz von beispielsweise $f_S \approx 46{,}5$ kHz, $f_S \approx 49{,}5$ kHz, oder $f_S \approx 51$ kHz angeregt werden. Weist das im Empfangspfad befindliche Sperrfilter erfindungsgemäß einen Frequenzgang auf, welcher Signale bei der Resonanzfrequenz $f_{RW}$ des Wandlers stärker dämpft, als die bei der Sendesignalfrequenz $f_S$ ausgesandten Messsignale, so kann der störende Einfluss des Ausschwingens auf die Nahmessfähigkeit reduziert werden.

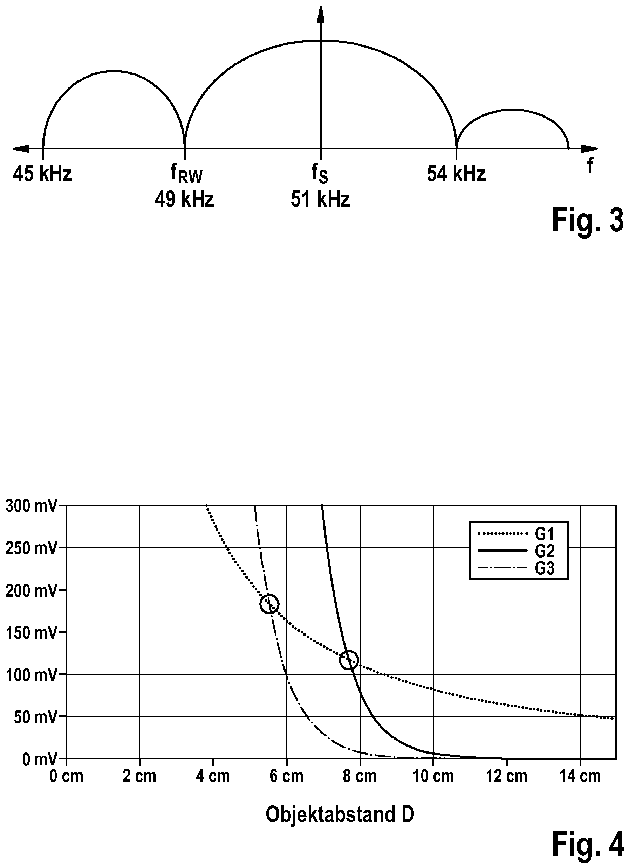

Insbesondere mit modernen digital realisierten Filtern lassen sich Frequenzgänge wie der in Fig. 3 gezeigte realisieren. Mit solchen Filtern lassen sich ausgewählte Frequenzen wie beispielsweise $f_{RW}$ unterdrücken. Im Idealfall ist die erreichte Unterdrückung unendlich groß. Deutlich wird auch, dass in der Praxis der bei Verwendung des dort gezeigten Sperrfilters Signale mit einer Signalfrequenz bei $f_S \approx 51$ kHz am wenigsten durch das Sperrfilter unterdrückt werden. Im Verhältnis zu der idealer Weise unendlich großen Unterdrückung bei der Sperrfrequenz $f_{RW}$ werden aber auch Signale mit einer Signalfrequenz von $f_S \approx 46{,}5$ kHz und/oder $f_S \approx 49{,}5$ kHz vernachlässigbar gering unterdrückt. In der Praxis ist eine relative Unterdrückung, also bezogen auf die Dämpfung des Nutzsignals, um einen Faktor von ca. 10 realistisch.

Figur 4 zeigt ein Diagramm zu den Spannungsamplituden des Echosignals G1 im Verhältnis zu einem ungefilterten Ausschwingsignal G2 gemäß dem Stand der Technik im Vergleich zu einem mittels eines erfindungsgemäßen Sperrfilters bearbeiteten Ausschwingsignals G3 des Wandlers. Auch die in Figur 4 dargestellten Graphen sind über einem korrespondierenden Objektabstand D in cm aufgetragen. Während die Nahmessgrenze, welche näherungsweise als Schnittpunkt der Graphen des Echosignals G1 mit dem Graphen der Ausschwingsignale G2 bzw. G3 bestimmbar ist, ohne Sperrfilterung nahe der 8-cm-Marke liegt, schneidet das Sperrfilter-gefilterte Signal G3 bereits deutlich unterhalb von 6 cm das Echosignal G1. Im Beispiel verbessert sich die Nahmess-Grenze durch die Sperrfilterung um mehr als 2 cm.

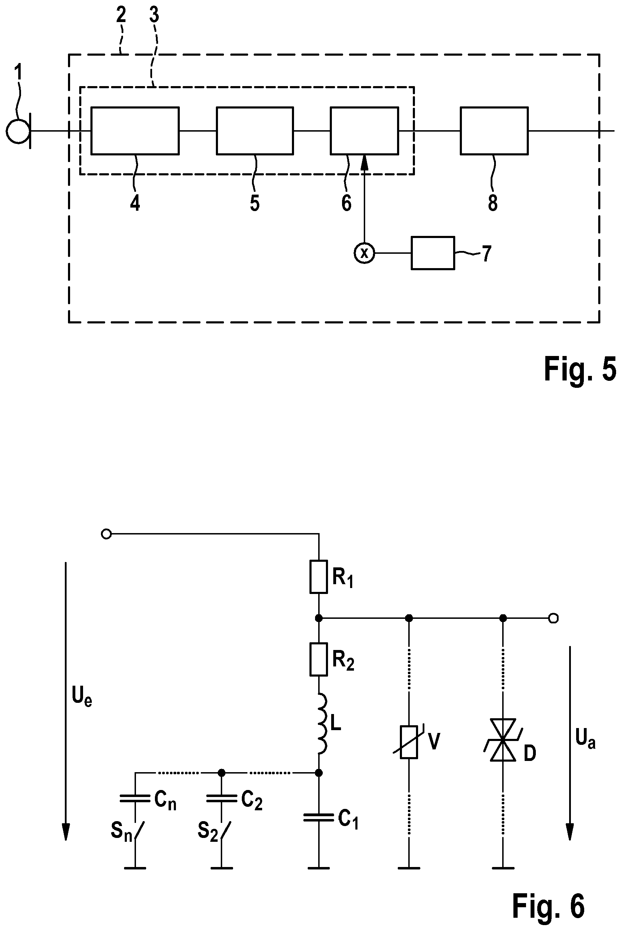

Figur 5 zeigt ein Blockschaltdiagramm, in welchem ein Wandler 1 mit einer Signalverarbeitungseinheit 2 verbunden ist. Die Signalverarbeitungseinheit 2 umfasst eine Filtereinheit 3, in welcher wiederum ein analoger Sperrfilter 4 das Eingangssignal des Wandlers 1 erhält und an einen ihm nachgeschalteten digitalen zeitdiskreten Filter 5 weitergibt. Der zeitdiskrete Filter 5 gibt seinerseits das gefilterte Signal an eine Mischerstufe 6 weiter, welche ein von einem lokalen Oszillator 7 stammendes Signal zur Frequenztransposition des gefilterten Signals verwendet. Eine Auswerteeinheit 8 identifiziert die gegeneinander aufgelösten bzw. manipulierten Signale zur Identifikation der Signallaufzeit und ist eingerichtet, den Auswerteergebnissen entsprechende Informationen an die Peripherie des Systems weiterzugeben. Diese kann beispielsweise ein automobiles Bordnetz, wie beispielsweise ein Bussystem (CAN-Bus oder andere Informationsleitungen) umfassen.

Figur 6 zeigt ein Prinzipschaltbild eines passiven Sperrfilters, welcher ein Eingangssignal $U_e$ in ein Ausgangssignal $U_a$ umwandelt. Hierzu sind ein ohmscher Widerstand $R_1$, ein ohmscher Widerstand $R_2$, eine Induktivität $L$ sowie eine Parallelschaltung aus Kapazitäten $C_1$, $C_2$, ... $C_n$ parallel zum Eingang $U_e$ vorgesehen. Die Kapazitäten $C_2$ bis $C_n$ sind über einen jeweiligen Schalter mit der Masse verbunden. Zwischen den zwei ohmschen Widerständen $R_1$ und $R_2$ ist ein Abgriff für die Ausgangsspannung $U_a$ vorgesehen. An diesem Abgriff liegt zusätzlich eine Ceradiode $D$ gegen Masse und ein ihr parallel geschalteter Varistor $V$. Nachteilig an dem in Figur 5 dargestellten Digitalfilter kann seine beschränkte Eingangsdynamik sein. Dessen Auflösung sollte für bekannte Anwendungen zwischen 16 bis 18 Bit liegen. Um dieses Erfordernis herabzusetzen, kann erfindungsgemäß der in Figur 6 dargestellte passive Sperrfilter verwendet werden. Dieser wird durch das Verhältnis seiner Ausgangsspannung $U_a$ zu seiner Eingangsspannung $U_e$ charakterisiert. Die Funktionsweise ist dem Fachmann bekannt. Der Frequenzgang wird durch die Widerstände, Spule und Kondensatoren bestimmt. Optional kann durch Parallelschalten der Kondensatoren C2 ... Cn zum Kondensator $C_1$ der Frequenzgang dieses Sperrfilters variiert werden. Ein Verfahren zur Filterfrequenznachführung wird weiter unten beschrieben.

Optional wird bei sehr hohen Eingangsspannungen die Übersteuerung des Signals $U_a$ passiv begrenzt indem geeignete begrenzende Bauelemente wie beispielsweise Varistoren $V$ oder/und Suppressordioden $D$ vorgesehen werden. Die durch diese nichtlinearen Bauelemente entstehenden weiteren Spektralanteile sind insbesondere bei schmalbandigen akustischen Messsignalen zumeist vernachlässigbar. In einer weiteren (nicht dargestellten) Ausgestaltung enthält der Passivfilter weder eine Induktivität $L$ noch eine Kapazität $C$, insbesondere, wenn es als Vorfilter für ein nachfolgendes Digitalfilter verwendet wird.

Im zuvor beschriebenen einfachen Idealfall ist das Ausschwingen durch eine feste Schwingfrequenz charakterisiert. In der Praxis weist das Ausschwingen infolge der mehreren an den Wandler angeschlossenen schwingfähigen Elemente einen zeitvarianten Verlauf der Ausschwingfrequenz $f_A(T)$ auf.

Da das Ausschwingen im Allgemeinen von der jeweils zuvor ausgesandten Signalform abhängt, wird bei der Gestaltung der ausgesandten Signalform und dem den Einfluss des Ausschwingens unterdrückenden Sperrfilters Wissen über Merkmale des Wandlers und seiner Beschaltung benötigt. Dies kann beispielsweise durch Analyse der Gestalt des Ausschwingens wie beispielsweise durch Analyse des Verlaufs der Signalstärke des Ausschwingens $R_A(T)$ sowie des Verlaufs der Frequenz des Ausschwingens $f_A(T)$ erhalten werden.

Das Verfahren zur Filterfrequenznachführung beinhaltet das Bestimmen der Ausschwingfrequenz bzw. dessen Verlauf $f_A(T)$. Insbesondere bei den durch Übersteuerung zu Beginn des Ausschwingens gekennzeichneten Signalen eignen sich die in WO-2011009786 A1 beschriebenen Vorrichtung und Verfahren zur Auswertung der Periodendauerfolgen. Anschließend wird die Filterfrequenz des Sperrfilters derart nachgeregelt, dass das Verhältnis von $R_A(d(T))$ zu $R_E(d)$ eine kleine Nahmessgrenze ergibt.

Bei dem in Fig. 6 dargestellten passiven Sperrfilter kann dies beispielsweise durch Zu- oder Abschalten der Kondensatoren $C_2$ bis $C_n$ erreicht werden. Mit anderen Worten wird die elektrische Verbindung des betreffenden Kondensators (z.B. mit der elektrischen Masse) getrennt bzw. hergestellt und der Kondensator somit wirksam bzw. unwirksam geschaltet.

Bei Digitalfiltern kann bei konstanter Abtastfrequenz durch Variation der Filterkoeffizienten eine gewünschte Sperrfrequenz eingestellt werden. Ein besonders hervorzuhebendes alternatives Verfahren zur Variation der Sperrfrequenz ist die Variation der Abtastfrequenz. Dieses eignet sich besonders bei Digitalfiltern mit festen Filterkoeffizienten. Beispielsweise lassen sich Filter besonders dann effizient realisieren, wenn das Verhältnis von Abtastfrequenz $F_S$ zur Filterfrequenz $f_{Filt}$, d.h. in diesem Fall der durch die Ausschwingresonanz des Wandlers $f_{RW}$ vorgegebenen Sperrfrequenz $f_{Filt} = f_{RW}$, einer natürlichen Zahl entspricht.

Erfahrungsgemäß schwankt die Frequenz der Ausschwingresonanz des Wandlers $f_{RW}$ infolge äußerer Einflüsse, wie Klima, im Bereich von $\pm 2\%$. Um angesichts dieser äußeren Einflüsse die Sperrwirkung des Sperrfilters stets optimal zu halten, sollte sich entsprechend der Schwankung von $f_{RW}$ die Abtastfrequenz proportional verändern, d.h., ebenfalls im Bereich von $\pm 2\%$. Eine solche kleine Schwankung wird bei rauscharmen Signalen die unterdrückende Wirkung des Sperrfilters deutlich verbessern; der negative Einfluss auf die Durchlässigkeit im Durchlassbereich kann jedoch, wie anhand des Frequenzganges in Fig. 3 ersichtlich, dagegen aufgrund der im Durchlassbereich flachen Flanken zumeist vernachlässigt werden.

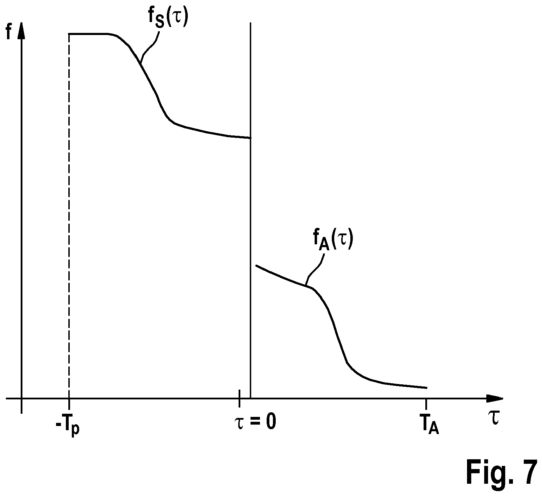

Beispielsweise kann während des Ausschwingens die Abtastfrequenz leicht variiert werden, um den in Fig. 3 dargestellten Frequenzgang des Sperrfilters für ein Ausschwingen mit einer zeitvarianten Resonanz $f_{RW} = f_A(T) \neq \text{const}_T$ zu erreichen, wie sie z.B. in der nachfolgenden Fig. 7 gezeigt wird.

Da ein Elektro-Akustik-Wandler bei der akustischen Umfelderfassung mittels ausgesandter akustischer Messsignalformen wiederholt gleichartig angesteuert wird, können diese Wiederholungen dazu genutzt werden, den jeweils aktuellen Verlauf des Ausschwingens zu bestimmen, um das Sperrfilter und/oder die im nachfolgenden Messzyklus ausgesandte Signalform so zu variieren, dass der Signalanteil des Ausschwingens gegenüber dem Signalanteil des Echos auf die ausgesandte Signalform im Empfangssignal unterdrückt wird.

Eine weitere Maßnahme zur Verminderung des negativen Einflusses des Ausschwingens auf die Nahmessfähigkeit verwendet eine veränderliche Impedanz, mit welcher der Wandler beschaltet wird. Auf diese Weise kann der Wandler während des Aussendens der akustischen Sendesignale mit einer ersten Impedanz einen Schwingkreis einer ersten Resonanzfrequenz bilden und während des Ausschwingens bzw. während des Echoumfangs im Nahbereich mit einer zweiten bzw. dritten Impedanz beschaltet werden, in Verbindung mit welcher er einen Resonanzkreis einer zweiten bzw. einer dritten Resonanzfrequenz bildet.

In der Praxis kann es jedoch zudem vorkommen, dass der Frequenzgang des Ausschwingens, wie in Figur 7 dargestellt, zeitvariabel ist.

In Figur 7 ist ein Sendesignal veränderlicher Frequenz $f_s(T)$ zwischen einem Zeitpunkt $-T_p$ bis $T = 0$ ausgesendet worden. Erkennbar ist dabei seine Frequenz von einem höheren Frequenzniveau über eine Flanke zunehmender Steilheit auf ein niedrigeres Niveau abgesunken. Deutlich niedriger als dieses zweite Frequenzniveau des Sendesignals beginnt ab einem Zeitpunkt $T = 0$ das Ausschwingsignal des Wandlers mit einer zeitlich veränderlichen Frequenz $f_A(T)$, dessen Frequenz im Laufe der Zeit zwischen $T = 0$ und $T_A$ eine dem Sendesignal ähnliche Charakteristik aufweist, nämlich in einem mittleren Bereich eine stark abfallende Flanke aufweist und gegen Erreichen der Zeit $T_A$ einen horizontalen Verlauf annimmt. Wird der in Figur 7 gezeigte zeitliche Verlauf der Frequenz des Anregungssignals gewählt, unterscheiden sich die Frequenzverläufe beider Signale bei einer Verschiebung um einen zeitlichen Versatz von $T_P$ nur noch durch eine zumindest annähernd konstante Frequenzdifferenz.

Alternativ kann abhängig von der Form des Ausschwingsignals, insbesondere vom Verlauf der Ausschwingfrequenz über der Zeit, des vorangegangenen Messzyklus' (beispielsweise anhand eines Modells des Wandlers) die nachfolgend ausgesandte Signalform bestimmt werden. Dies erfolgt beispielsweise derart, dass eine hohe akustische Energie ausgestrahlt wird, um hohe Reichweiten zu erzielen oder beispielsweise derart, dass eine hohe Ortsauflösung ermöglicht wird, oder derart, dass die Sendefrequenz sich stets von der Ausschwingfrequenz unterscheidet. Daher ist bevorzugt eine Zeitvariantenfilterung durchzuführen, d.h., der Sperrfilter sollte nur während des Ausschwingens aktiv sein. In der Praxis liegt dies in Zeitbereichen $T < 2$ ms. Dies ist insbesondere bei Auftreten von Dopplerverschiebung sinnvoll. Ist die Frequenz des ausgesandten akustischen Impulses beispielsweise etwas kleiner als die Frequenz des Sperrfilters und wird der ausgesandte Impuls von einem sich dem Sensor nähernden Objekt reflektiert, so kann die Frequenz des reflektierten Echos aufgrund des Dopplereffektes gegenüber dem ausgesandten Signal erhöht sein und somit im Bereich der Sperrfrequenz des Sperrfilters liegen. Auf diese Weise würde das reflektierte Nutzsignal unerwünschterweise also vom Sperrfilter unterdrückt. Bei zeitvarianter Filterung sollte das Sperrfilter also nur so lange aktiv sein, wie das Ausschwingsignal größer ist als zu erwartende relevante Echosignale.

Erfindungsgemäß wird eine zeitvariante Filterung beispielsweise dadurch erreicht, dass zusätzlich zum Sperrfilter zumindest ein anderes Übertragungsglied mit anderer Sperrwirkung bzw. mit einer anderen Filterwirkung vorgesehen ist. Zusätzlich kann eine Addierstelle ("adder") vorgesehen sein, welche die zur Weiterverarbeitung als Empfangssignal innerhalb eines Messzyklus' anfangs das Signal des Sperrfilters und nachfolgend das Signal des anderen Übertragungsgliedes weiterreicht.

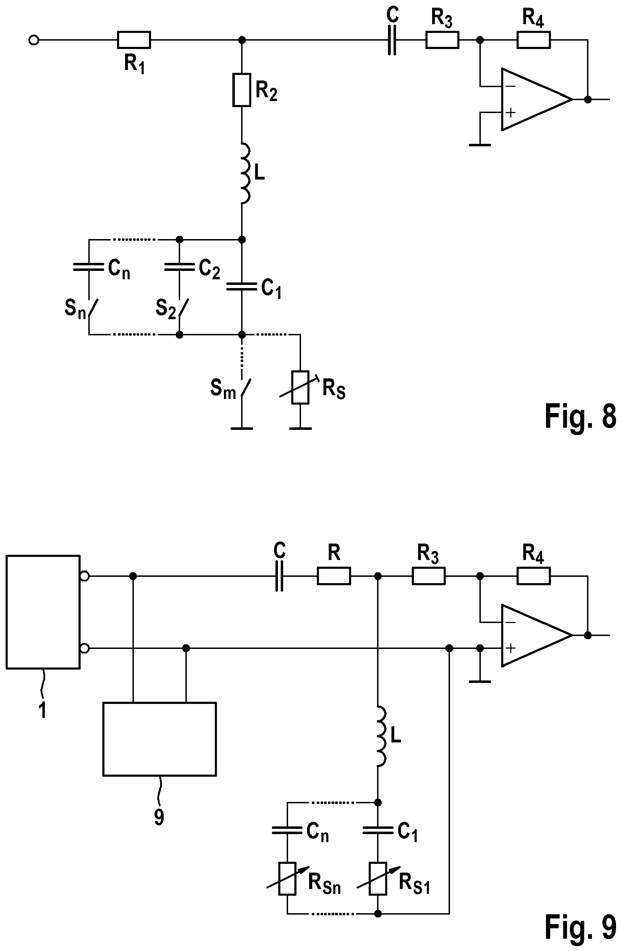

Figur 8 zeigt eine alternative Ausführungsform eines Sperrfilters, wie es bereits in Verbindung mit Figur 6 vorgestellt worden ist. Das zwischen dem ohmschen Widerstand $R_2$ und der elektrischen Masse angeordnete Filternetzwerk ist gegenüber Figur 6 dadurch verändert worden, dass zwischen den in Figur 6 gezeigten Kondensatoren $C_1$ bis $C_n$ bzw. den an diese gegen Masse angeschlossene Schalter und der elektrischen Masse ein kontinuierlich veränderlicher Widerstand $R_S$ geschaltet ist. Als eine Alternative ist dem veränderlichen Widerstand $R_S$ ein Schalter $S_m$ zwischen den Kondensatoren $C_1$ bis $C_n$ bzw. den Schaltern $S_n$ und elektrischer Masse vorgesehen.

Im Folgenden wird zunächst die Alternative, aufweisend den Schalter $S_m$, jedoch nicht den veränderlichen Widerstand $R_S$, besprochen. Ist der Schalter geschlossen, ist das Filternetzwerk in Funktion. Dieser Zustand kann beispielsweise während des Ausschwingens und Empfangens gegenüber den Ausschwingvorgängen schwacher Signale dazu verwendet werden, das empfangene Signal gegenüber den Ausschwingvorgängen hervorzuheben. Wird der Schalter geöffnet, so ist das Filternetzwerk deaktiviert. Ein solcher Zustand kann beispielsweise beim Aussenden des Sendesignals bzw. beim Empfangen von Reflexionen, welche gegenüber den Ausschwingvorgängen ohnehin einen vergleichsweise hohen Pegel aufweisen, verwendet werden.

Nachfolgend wird die Alternative diskutiert, welche den veränderlichen Widerstand $R_S$, jedoch nicht den Schalter $S_m$ aufweist. Im Wesentlichen ermöglicht diese Alternative eine stufenlose Anpassung zwischen Zuständen, wie sie durch die vorstehend beschriebene Alternative mit dem Schalter $S_m$ diskutiert worden sind. Während die Frequenzen des dargestellten Filternetzwerks durch den veränderlichen Widerstand $R_S$ nur wenig bzw. überhaupt nicht beeinflusst werden, wird die Dämpfung des Filternetzwerks bzw. seine Güte und damit das Dämpfungsmaß beeinflusst. Auf diese Weise könnte auf einen zwischen dem Pegel des Ausschwingsignals und dem Pegel des Echosignals veränderliche Differenz reagiert werden. Mit anderen Worten könnte über der Zeit das Dämpfungsmaß des Filternetzwerks einem Abklingen des Ausschwingsignals nachgefühlt werden, wodurch auch Verluste im Echosignal vermindert werden können. Sämtliche Schalter der in Figur 8 dargestellten Anordnung lassen sich ebenso wie die variablen Widerstände besonders leicht durch Feldeffekttransistoren realisieren, deren Drain-Source-Strecke als Kleinsignal angesteuert wird.

Figur 9 zeigt eine alternative Ausgestaltung zu den in Figur 6 und Figur 8 dargestellten Filternetzwerken. In Figur 9 sind die Kondensatoren $C_1$ bis $C_n$ jeweils durch veränderliche ohmsche Widerstände $R_{S1}$ bis $R_{Sn}$ mit der Masse verbunden. Gegenüber der in Figur 8 dargestellten Anordnung bietet sich hierdurch der Vorteil, dass der Einfluss der verwendeten Kondensatoren unabhängig voneinander eingestellt werden kann, so dass mit weniger Kondensatoren viele verschiedene Kondensatorwerte nahezu kontinuierlich eingestellt werden können. Hierdurch verbessert sich die Regelbarkeit des Filternetzwerks, wodurch der Einfluss der Filterung mit dem Zeitverlauf im Rahmen eines Empfangs- bzw. Messzyklus' reduziert werden kann.

Es ist ein Kerngedanke der vorliegenden Erfindung, entgegen dem energetisch sinnvollen und im Stand der Technik weit verbreiteten Anregen eines Wandlers mit seiner Resonanzfrequenz eine von der Resonanzfrequenz des Wandlers unterschiedliche Frequenz zur Anregung des Wandlers zu verwenden. Da nach dem Abschalten des Anregungssignals der Wandler im Wesentlichen (ggf. unter Einflussnahme weiterer elektrischer Bauelemente) frei ausschwingt, kann das an der Anregungsfrequenz orientierte reflektierte und vom Wandler empfangene Signal mittels Filtertechnik gegenüber dem Ausschwingsignal des Wandlers hervorgehoben werden.

Es ist ein weiterer Kerngedanke der vorliegenden Erfindung, eine Filterung des Wandlersignals zeitvariant durchzuführen, um eine bessere Trennung und damit Auflösbarkeit frequenzveränderlicher Ausschwing- und frequenzveränderlichen Empfangssignalen darstellen zu können.

**Patentansprüche**

1.   Vorrichtung zur Umfeldsensorik, insbesondere zur akustischen Signalaufnahme, umfassend

   - einen elektroakustischen Wandler (1) zum Senden und Empfangen von Signalen,
   - eine Signalverarbeitungseinheit (2) mit einem Sperrfilter (4),

   wobei die Signalverarbeitungseinheit (2) eingerichtet ist, anhand eines über den Wandler (1) ausgesendeten ersten Signals in Verbindung mit dem reflektierten, über den Wandler (1) empfangenen ersten Signals einen Abstand des Wandlers (1) von Umgebungsobjekten zu bestimmen, wobei die Signalverarbeitungseinheit (2) eingerichtet ist, den Wandler (1) mit einer im Vergleich zu seinem Ausschwingsignal unterschiedlichen Signalform zum Senden anzuregen, und durch den Sperrfilter (4) das über den Wandler (1) empfangene Signal zumindest anteilig von dem Ausschwingsignal zu befreien, wobei die Signalverarbeitungseinheit (2) eingerichtet ist, den Sperrfilter (4) den Eigenschaften des Ausschwingsignals innerhalb eines Messzyklus nachzuführen.

2.   Vorrichtung nach einem der vorstehenden Ansprüche, **dadurch gekennzeichnet, dass** die Signalverarbeitungseinheit (2) eingerichtet ist, die Sperrfrequenz des Sperrfilters (4) der Frequenz des Ausschwingsignals des Wandlers (1) über der Zeit nachzuführen, und/oder eine zeitvariante Filterung durchzuführen, indem das Dämpfungsmaß des Sperrfilters (4) dem Zeitverlauf des Verhältnisses der Stärke des Ausschwingsignals in Bezug auf die Stärke des empfangenen Signals nachgeführt wird.

3.   Vorrichtung nach einem der vorstehenden Ansprüche (4), **dadurch gekennzeichnet, dass** die Signalverarbeitungseinheit (2) eingerichtet ist, die zeitvariante Filterung durch

   - den Sperrfilter (4), sowie
   - zumindest einen dem Sperrfilter (4) nachgeschalteten zweiten Filter (5), sowie
   - eine analoge Mischerstufe (6) durchzuführen, wobei die Signalverarbeitungseinheit (2) eingerichtet ist, die Filterfrequenzeigenschaften des zweiten Filters (5) den Filterfrequenzeigenschaften des Sperrfilters (4) nachzuführen und wobei die Mischerstufe (6) eingerichtet ist, das Filtersignal aus dem Ausgangssignal des Sperrfilters (4) und/oder aus dem Ausgangssignal des zweiten Filters (5) zu transponieren.

4.   Vorrichtung nach einem der vorstehenden Ansprüche, **dadurch gekennzeichnet, dass** das Sperrfilter (4) als zeitdiskret arbeitendes Filter, insbesondere als zeitdiskret arbeitendes Digitalfilter, ausgeführt ist.

5.   Vorrichtung nach Anspruch 5, **dadurch gekennzeichnet, dass** die Signalverarbeitungseinheit (2) eingerichtet ist, die filternden Eigenschaften des zeitdiskret arbeitenden Sperrfilters (4) durch Variation der Abtastfrequenz und/oder Variation der Koeffizienten des Sperrfilters (4) zeitlich zu variieren.

6.   Vorrichtung nach einem der Ansprüche 1 bis 3, **dadurch gekennzeichnet, dass** das Sperrfilter (4) diskrete elektrische Bauteile im Empfangspfad umfasst, insbesondere aus diesen besteht, wobei das Sperrfilter (4) eingerichtet ist, insbesondere Frequenzen bei der Resonanzfrequenz des Wandlers (1) zu unterdrücken, wobei insbesondere die Zeitvarianz des Filters (4) durch ein Trennen bzw. Herstellen elektrischer Verbindungen der Bauteile innerhalb d. Empfangspfades erzeugt wird.

**7.** Vorrichtung nach einem der vorstehenden Ansprüche, **dadurch gekennzeichnet, dass** die Signalverarbeitungseinheit (2) eingerichtet ist, eine analoge Sperrfilterung und anschließend eine zeitdiskrete Filterung durchzuführen.

**8.** Vorrichtung nach einem der vorstehenden Ansprüche, **dadurch gekennzeichnet, dass** die Signalverarbeitungseinheit (2) eingerichtet ist, das Sendesignal auf einer Frequenz auszusenden, die sich von der Frequenz des Ausschwingsignals unterscheidet.

**9.** Vorrichtung nach einem der vorstehenden Ansprüche, **dadurch gekennzeichnet, dass** die Signalverarbeitungseinheit (2) eingerichtet ist, den Frequenzverlauf des Sendesignals dem Frequenzverlauf des Ausschwingsignals, insbesondere mit einem festen Frequenzversatz zum vorausgegangenen Ausschwingsignal, nachzuführen.

**Claims**

**1.** Apparatus for sensing the environment, in particular for recording acoustic signals, comprising

- an electroacoustic transducer (1) for transmitting and receiving signals,
- a signal processing unit (2) having a rejection filter (4), wherein the signal processing unit (2) is set up to determine a distance between the transducer (1) and environment objects on the basis of a first signal emitted via the transducer (1) in conjunction with the reflected first signal received via the transducer (1), wherein the signal processing unit (2) is set up to excite the transducer (1) to transmit using a signal waveform which differs from that of its decay signal and to at least proportionately free the signal received via the transducer (1) from the decay signal by means of the rejection filter (4), wherein the signal processing unit (2) is set up to track the rejection filter (4) to the properties of the decay signal within a measuring cycle.

**2.** Apparatus according to one of the preceding claims, **characterized in that** the signal processing unit (2) is set up to track the rejection frequency of the rejection filter (4) to the frequency of the decay signal from the transducer (1) over time and/or to carry out time-variant filtering by tracking the attenuation level of the rejection filter (4) to the time profile of the ratio of the strength of the decay signal with respect to the strength of the received signal.

**3.** Apparatus according to one of the preceding claims (4), **characterized in that** the signal processing unit (2) is set up to carry out the time-variant filtering by means of

- the rejection filter (4) and
- at least one second filter (5) connected downstream of the rejection filter (4) and
- an analogue mixer stage (6), wherein the signal processing unit (2) is set up to track the filter frequency properties of the second filter (5) to the filter frequency properties of the rejection filter (4), and wherein the mixer stage (6) is set up to transpose the filter signal from the output signal from the rejection filter (4) and/or from the output signal from the second filter (5).

**4.** Apparatus according to one of the preceding claims, **characterized in that** the rejection filter (4) is in the form of a filter which operates on a time-discrete basis, in particular in the form of a digital filter which operates on a time-discrete basis.

**5.** Apparatus according to Claim 5, **characterized in that** the signal processing unit (2) is set up to temporally vary the filtering properties of the rejection filter (4) operating on a time-discrete basis by varying the sampling frequency and/or varying the coefficients of the rejection filter (4) .

**6.** Apparatus according to one of Claims 1 to 3, **characterized in that** the rejection filter (4) comprises discrete electrical components in the reception path, in particular consists of said components, wherein the rejection filter (4) is set up to suppress, in particular, frequencies at the resonant frequency of the transducer (1), wherein the time variance of the filter (4), in particular, is produced by disconnecting or establishing electrical connections between the components within the reception path.

7. Apparatus according to one of the preceding claims, **characterized in that** the signal processing unit (2) is set up to carry out analogue rejection filtering and then time-discrete filtering.

8. Apparatus according to one of the preceding claims, **characterized in that** the signal processing unit (2) is set up to emit the transmission signal at a frequency which differs from the frequency of the decay signal.

9. Apparatus according to one of the preceding claims, **characterized in that** the signal processing unit (2) is set up to track the frequency profile of the transmission signal to the frequency profile of the decay signal, in particular with a fixed frequency offset with respect to the previous decay signal.


**Revendications**

1. Dispositif de capteur d'environnement, en particulier pour l'enregistrement de signaux acoustiques, comprenant

   - un transducteur électroacoustique (1) destiné à émettre et recevoir des signaux,
   - une unité de traitement de signal (2) comportant un filtre coupe-bande (4),

   l'unité de traitement de signal (2) étant conçue pour déterminer une distance entre le transducteur (1) et des objets environnants à partir d'un premier signal émis par le transducteur (1) en liaison avec le premier signal réfléchi reçu par le transducteur (1), l'unité de traitement de signal (2) étant conçue pour exciter le transducteur (1) avec une forme de signal à émettre différente de celle de son signal d'amortissement et pour libérer, par le biais du filtre coupe-bande (4), le signal reçu par le transducteur (1) au moins en partie du signal d'amortissement, l'unité de traitement de signal (2) étant conçue pour asservir le filtre coupe-bande (4) aux caractéristiques du signal d'amortissement au cours d'un cycle de mesure.

2. Dispositif selon l'une des revendications précédentes, **caractérisé en ce que** l'unité de traitement de signal (2) est conçue pour asservir la fréquence de coupure du filtre coupe-bande (4) à la fréquence du signal d'amortissement du transducteur (1) dans le temps et/ou pour effectuer un filtrage temporel par le fait que la quantité d'amortissement du filtre coupe-bande (4) est asservie à la variation dans le temps du rapport entre l'intensité du signal d'amortissement et l'intensité du signal reçu.

3. Dispositif selon l'une des revendications précédentes (4), **caractérisé en ce que** l'unité de traitement de signal (2) est conçue pour effectuer le filtrage temporel par le biais

   - du filtre coupe-bande (4), et
   - d'au moins un deuxième filtre (5) en aval du filtre coupe-bande (4), et
   - un étage mélangeur analogique (6),

   l'unité de traitement de signal (2) étant conçue pour asservir les caractéristiques fréquentielles du deuxième filtre (5) aux caractéristiques fréquentielles du filtre coupe-bande (4), et l'étage mélangeur (6) étant conçu pour transposer le signal de filtre à partir du signal de sortie du filtre coupe-bande (4) et/ou du signal de sortie du deuxième filtre (5).

4. Dispositif selon l'une des revendications précédentes, **caractérisé en ce que** le filtre coupe-bande (4) est réalisé sous la forme d'un filtre temporellement discret, en particulier un filtre numérique temporellement discret.

5. Dispositif selon la revendication 5, **caractérisé en ce que** l'unité de traitement de signal (2) est conçue pour faire varier les caractéristiques de filtrage du filtre coupe-bande temporellement discret (4) en faisant varier la fréquence d'échantillonnage et/ou les coefficients du filtre coupe-bande (4).

6. Dispositif selon l'une des revendications 1 à 3, **caractérisé en ce que** le filtre coupe-bande (4) comprend des composants électriques discrets dans le trajet de réception, notamment est constitué de ceux-ci, le filtre coupe-bande (4) étant conçu pour supprimer en particulier des fréquences à la fréquence de résonance du transducteur (1), la variance temporelle du filtre (4) étant en particulier générée par coupure ou établissement de liaisons électriques des composants à l'intérieur du chemin de réception.

7. Dispositif selon l'une des revendications précédentes, **caractérisé en ce que** l'unité de traitement de signal (2) est conçue pour effectuer un filtrage coupe-bande analogique puis un filtrage temporellement discret.

8. Dispositif selon l'une des revendications précédentes, **caractérisé en ce que** l'unité de traitement de signal (2) est conçue pour émettre le signal d'émission à une fréquence différente de la fréquence du signal d'amortissement.

9. Dispositif selon l'une des revendications précédentes, **caractérisé en ce que** l'unité de traitement de signal (2) est conçue pour asservir l'allure des fréquences du signal d'émission à l'allure des fréquences du signal d'amortissement, en particulier avec un décalage de fréquence fixe par rapport au signal d'amortissement précédent.

Fig. 1

D [ mm ]

Fig. 2

45 kHz      $f_{RW}$      $f_S$      54 kHz      f

49 kHz      51 kHz

Fig. 3

Objektabstand D

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2001012238 A1
- WO 2011009786 A1
- WO 2010063510 A1
- EP 2251710 A2